# FASCICULE DE BREVET EUROPEEN

(11) **EP 3 341 661 B1**
(45) Date de publication et mention de la délivrance du brevet: **23.10.2019**
(21) Numéro de dépôt: 16747831.2
(22) Date de dépôt: 07.07.2016
(51) Int. Cl.: H02S 30/10, F28F 1/00, H02S 40/44, F24S 25/60

(54) **DISPOSITIF DE SOLIDARISATION D'UN ÉCHANGEUR THERMIQUE À UNE FACE D'UN SECOND PANNEAU, SYSTÈME SOLAIRE HYBRIDE ET PROCÉDÉ D'OBTENTION DU SYSTÈME SOLAIRE HYBRIDE**
VORRICHTUNG ZUR BEFESTIGUNG EINES WÄRMETAUSCHERS AN EINER SEITE EINES ZWEITEN PANEELS, HYBRIDE SOLARANLAGE SOWIE VERFAHREN ZUR HERSTELLUNG DER HYBRIDEN SOLARANLAGE
DEVICE FOR SECURING A HEAT EXCHANGER TO A FACE OF A SECOND PANEL, HYBRID SOLAR SYSTEM AND METHOD FOR OBTAINING THE HYBRID SOLAR SYSTEM

(30) Priorité: 28.08.2015 FR 1557985
(43) Date de publication de la demande: 04.07.2018
(73) Titulaire: Li-Mithra Engineering, 88390 Uxegney (FR)
(72) Inventeur: GARRIGUES, François, 88000 Jeuxey (FR); WISSEMBERG, Benoît, 88000 Epinal (FR)
(74) Mandataire: Hugues, Catherine
(86) Numéro de dépôt international: PCT/FR2016/051725
(87) Numéro de publication internationale: WO 2017/037353

(56) Documents cités:
- AU-A4- 2014 101 550
- BE-A- 518 147
- DE-A1- 19 851 230
- DE-C1- 19 900 831
- US-A- 3 996 682
- US-A- 5 799 431

## Description

La présente invention a pour objet un dispositif de solidarisation d'un échangeur thermique à une face d'un second panneau, tel que notamment un panneau photovoltaïque.

La présente demande concerne également un système hybride de collecte d'énergie solaire comportant un échangeur thermique relié à une face d'un panneau photovoltaïque au moyen du dispositif de solidarisation selon l'invention.

Par ailleurs, la présente demande a également pour objet l'utilisation d'un tel dispositif de solidarisation pour obtenir un système solaire hybride, comportant un panneau photovoltaïque couplé à un échangeur thermique.

A l'heure actuelle, afin d'optimiser au mieux l'énergie solaire, il est de plus en plus courant de coupler à un panneau photovoltaïque, apte à produire un courant électrique à partir d'un rayonnement solaire, un échangeur thermique apte à récupérer une énergie thermique aussi bien du rayonnement solaire qu'il reçoit que des pertes thermiques du panneau photovoltaïque.

Généralement, l'échangeur thermique est disposé en vis-à-vis de la face arrière du panneau photovoltaïque de façon à refroidir celui-ci, et d'en extraire les calories de façon optimisée. La présence d'air, excellent isolant thermique, entre l'échangeur thermique et le panneau photovoltaïque étant néfaste au bon fonctionnement de l'échangeur thermique, il est nécessaire de disposer d'un couplage permettant un excellent contact entre les deux dispositifs.

Différentes solutions permettant de solidariser un échangeur thermique à un panneau photovoltaïque ont été testées à ce jour.

L'utilisation d'une colle de type polyuréthane a par exemple été proposée. Cependant, cette solution n'a pas donné satisfaction. Des difficultés ont été rencontrées lors de l'application de la colle dont la viscosité s'est révélée trop importante. En outre, il a été constaté que la qualité de l'échange thermique n'est pas optimum, et que des problèmes de dilatation thermique peuvent survenir et conduire à la rupture du couplage, en raison de dilatations différentielles de l'échangeur thermique et du panneau photovoltaïque l'un par rapport à l'autre, qui fatiguent les matériaux par cisaillements. Par ailleurs, il est nécessaire de choisir une colle dont les composants autorisent un échange thermique entre les deux dispositifs, ce qui impose un choix de colle spécifique relativement onéreuse se répercutant inévitablement sur le prix final du système solaire hybride.

Il a également été proposé d'intégrer totalement un échangeur thermique dans un panneau photovoltaïque. Une telle solution implique néanmoins de prévoir une isolation électrique et une résistance mécanique suffisante de l'échangeur thermique engendrant un choix restreint de matériaux pour celui-ci. De plus, dans ce cas, l'échangeur thermique est classiquement réalisé en acier inoxydable, qui est un mauvais conducteur thermique et qui contribue à diminuer le rendement global du système solaire hybride obtenu.

Les documents DE 198 51 230 A1 et AU 2014 101 550 A4 divulguent des dispositifs de solidarisation d'un échangeur à un panneau photovoltaïque.

La présente invention vise à pallier ces différents inconvénients et propose à cet effet de fournir un dispositif de solidarisation d'un échangeur thermique à une face d'un second panneau tel que notamment un panneau photovoltaïque permettant un contact plan sur plan résistant entre la face concernée du second panneau et l'échangeur thermique. Ainsi, avec un tel dispositif de solidarisation, l'éventuel film d'air isolant classiquement présent entre un panneau photovoltaïque et un échangeur thermique est supprimé et l'échange de chaleur entre deux tels dispositifs peut s'effectuer de manière optimale. Un autre avantage du dispositif de solidarisation selon l'invention, lorsqu'il est appliqué à l'assemblage d'un échangeur thermique sur un panneau photovoltaïque, est de permettre, de par sa structure, un échange optimal d'énergie thermique entre l'échangeur thermique et le milieu environnant. D'autre part, l'invention entend également proposer une solution à la fois résistante à une exposition aux intempéries qui permette d'éviter toute usure et toute détérioration intempestive des pièces au fil de leur exposition à un milieu extérieur et respectueuse de l'intégrité structurelle des deux panneaux concernés, notamment un échangeur thermique et un panneau photovoltaïque.

A cet effet, la présente invention a pour objet un dispositif de solidarisation du genre indiqué en préambule, caractérisé en ce qu'il comporte d'une part un organe pourvu de moyens de rappel élastique mobiles entre une position passive et une position active correspondant à la position d'utilisation du dispositif de solidarisation, et d'autre part des moyens d'assemblage dudit organe audit premier panneau ou audit second panneau, lesdits moyens d'assemblage étant aptes à placer les moyens de rappel élastique dans leur position active dans laquelle, dans sa position d'utilisation, ledit dispositif de solidarisation exerce sur ledit premier panneau placé contre la face du second panneau une force orientée en direction dudit second panneau, dans lequel ledit organe est défini par un tronçon de profilé plat présentant une face supérieure et une face inférieure, tandis que lesdits moyens d'assemblage comportent un cadre, présentant une section en « L », destiné à border ladite face du second panneau et agencé pour former un rebord apte à s'étendre vers l'intérieur de ladite face à une hauteur h supérieure à l'épaisseur e du premier panneau, tandis que le tronçon de profilé plat présente une longueur L choisie de manière telle que, dans la position d'utilisation dudit dispositif de solidarisation, ledit profilé plat s'étende sur l'ensemble formé par le premier et le second panneau et ses extrémités sont insérées sous le rebord dudit cadre lorsqu'il est solidarisé à ladite face, et sont en appui contre ledit rebord.

Dans ce cas, au moins un des bords longitudinaux dudit profilé plat peut être prolongé par une aile élastique s'étendant en direction de sa face inférieure et apte à adopter une position passive dans laquelle une extrémité libre de l'aile est éloignée de ladite face inférieure et une position active dans laquelle l'extrémité libre est rapprochée de ladite face inférieure, la distance comprise entre l'extrémité libre et ladite face inférieure dudit profilé plat, dans la position passive de ladite aile, correspondant à au moins la hauteur à laquelle s'étend le rebord du cadre lorsqu'il borde la face du second panneau.

Selon une caractéristique de l'invention, l'aile élastique peut s'étendre sur toute la longueur dudit bord du profilé plat.

Par ailleurs, l'autre bord longitudinal dudit profilé plat peut être prolongé par une bande de renfort mécanique s'étendant perpendiculairement au profilé plat en direction de sa face inférieure.

Avantageusement, le dispositif de solidarisation selon l'invention peut en outre comporter des moyens de fixation du profilé plat au rebord du cadre destiné à border la face du second panneau, ces moyens de fixation pouvant être définis par des vis ou des rivets.

Par ailleurs, la présente invention prévoit encore de réaliser préférentiellement le dispositif de solidarisation en un matériau présentant des propriétés anticorrosion, choisi parmi la liste comprenant un métal, un alliage, un matériau composite, recouvert ou non d'une couche de peinture.

La présente demande vise également à protéger un système hybride de collecte d'énergie solaire comprenant un échangeur thermique relié à une face d'un panneau photovoltaïque au moyen d'au moins un dispositif de solidarisation tel que défini ci-dessus.

L'échangeur thermique utilisé dans un tel système hybride selon l'invention est avantageusement réalisé en un matériau conducteur d'énergie thermique choisi parmi la liste comprenant l'aluminium, le cuivre, un alliage, un matériau composite.

Un autre objet de la présente demande concerne un procédé de solidarisation d'un échangeur thermique à une face d'un panneau photovoltaïque prévoyant d'utiliser au moins un dispositif de solidarisation tel que défini ci-dessus.

La présente invention sera mieux comprise à la lecture de la description d'un exemple détaillé de réalisation fourni à titre d'exemple non limitatif, effectuée en référence aux figures 1 à 5 annexées, dans lesquelles :
- La figure 1 représente une vue en perspective d'un système hybride selon l'invention, avant la solidarisation de l'échangeur thermique au panneau photovoltaïque,
- La figure 2 illustre une vue en perspective du système hybride de la figure 1 dans lequel l'échangeur thermique est couplé au panneau photovoltaïque au moyen de trois dispositifs de solidarisation selon l'invention,
- La figure 3 est une vue agrandie du détail D de la figure 2,
- La figure 4 illustre une vue en coupe selon AA de la figure 2, et
- La figure 5 illustre une vue en perspective d'un dispositif de solidarisation selon l'invention.

En référence aux figures, la présente invention concerne un dispositif de solidarisation 1 d'un premier panneau, tel que notamment un échangeur thermique 2 à une face d'un second panneau, tel que notamment un panneau photovoltaïque 3, un tel assemblage permettant d'obtenir un système hybride 10 de collecte d'énergie solaire. De manière classique, l'échangeur thermique 2 est parcouru par un fluide caloporteur permettant de récupérer l'énergie thermique du milieu environnant, notamment contenue dans le vent, la pluie, etc., et celle dissipée par le panneau photovoltaïque 3, puis de la restituer à une source chaude quelconque directement ou via un dispositif additionnel, tel que notamment une pompe à chaleur, couplé au système solaire hybride 10.

De manière à optimiser les échanges d'énergie thermique, l'échangeur thermique 2 est de préférence réalisé en aluminium, en cuivre, en un alliage, en un matériau composite ou en tout matériau équivalent qui soit à la fois léger, thermo-conducteur et compatible à un contact permanent avec un fluide caloporteur.

Egalement dans le but de maximiser les échanges thermiques, l'échangeur thermique 2 du système hybride 10 présente préférentiellement une forme, en l'occurrence parallélépipédique dans la variante illustrée, et des dimensions sensiblement équivalentes à celles du panneau photovoltaïque 3, de sorte que lorsque les deux dispositifs 2, 3 sont reliés, l'échangeur thermique 2 recouvre presqu'entièrement le panneau photovoltaïque 3.

En outre, l'échangeur thermique 2 présente par ailleurs avantageusement une épaisseur e la plus réduite possible, favorisant également les échanges thermiques, et une structure lui permettant de résister à une pression d'environ 3 bars.

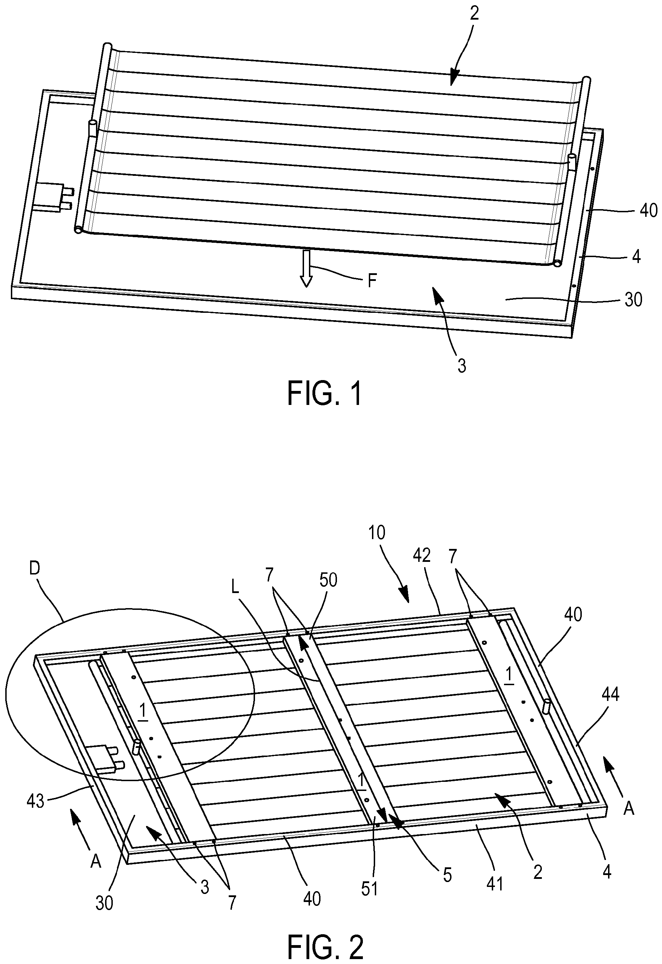

Dans la variante de réalisation illustrée, l'échangeur thermique 2 est destiné à être disposé contre la face arrière 30 du panneau photovoltaïque 3 (cf. flèche F, fig. 1). Cette dernière est ici bordée par un cadre périphérique 4 comportant deux côtés longitudinaux opposés 41, 42 et deux côtés latéraux opposés 43, 44. Le cadre 4 présente une section en « L » formant un rebord 40 s'étendant vers l'intérieur de la face arrière 30 du panneau photovoltaïque 3, à une hauteur h supérieure à l'épaisseur e de l'échangeur thermique 2, de sorte que lorsque l'échangeur thermique repose contre la face arrière 30 du panneau photovoltaïque 3, un jeu subsiste entre l'échangeur thermique 2 et le rebord 40 du cadre 4.

Conformément à l'invention, l'échangeur thermique 2 est solidarisé à la face arrière 30 du panneau photovoltaïque 3 au moyen d'un ou plusieurs dispositifs de solidarisation 1, avantageusement conçus pour le plaquer avec une surface de contact maximale contre ladite face arrière 30.

Le dispositif de solidarisation 1 est préférentiellement réalisé en un matériau thermo-conducteur présentant des propriétés anticorrosion, tel que notamment un métal, un alliage, un matériau composite, recouvert ou non d'une couche de peinture.

Dans la variante de réalisation illustrée, le système solaire hybride 10 comporte trois dispositifs de solidarisation 1 régulièrement répartis sur sa longueur de sorte à assurer un parfait maintien de l'échangeur thermique 2 contre le panneau photovoltaïque 3.

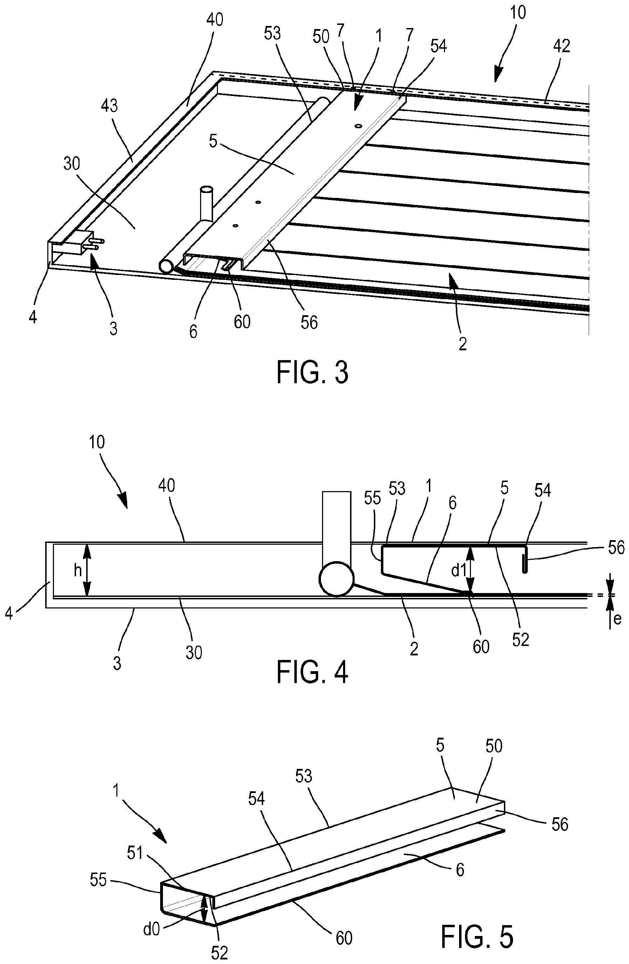

Chaque dispositif de solidarisation 1 comporte dans l'exemple illustré un profilé plat 5 dont la longueur L est choisie de manière telle que dans la position d'utilisation du dispositif de solidarisation 1, il soit apte à s'étendre entre deux points distincts du rebord 40, par exemple situés respectivement le long d'un des côtés longitudinaux opposés 41, 42 du cadre 4. Ainsi, dans la position d'utilisation du dispositif de solidarisation 1 illustrée aux figures 2 à 4, le profilé plat 5 s'étend transversalement au système solaire hybride 10 et ses extrémités 50, 51 sont chacune insérées sous le rebord 40, contre lequel elles prennent appui.

Par ailleurs, un bord longitudinal 53 du profilé plat 5 est prolongé par une aile élastique 6 s'étendant en direction de la face inférieure 52 du profilé plat 5 et reliée audit bord longitudinal 53 par une bande de matière 55 perpendiculaire audit profilé plat 5. L'autre bord longitudinal 54 du profilé plat 5 est prolongé par une bande de renfort mécanique 56 s'étendant perpendiculairement au profilé plat 5 en direction de sa face inférieure 52. L'aile élastique 6 s'étend de préférence, mais non obligatoirement, sur toute la longueur du bord longitudinal 53 considéré du profilé plat 5.

Conformément à l'invention, l'aile élastique 6 est apte à adopter une position passive de repos dans laquelle, lorsque le dispositif de solidarisation 1 est séparé du système solaire hybride 10, son extrémité libre 60 est éloignée de la face inférieure 52 du profilé plat 5 d'une distance d0 correspondant à au moins la hauteur h à laquelle s'étend le rebord 40 du cadre 4 bordant la face arrière 30 du panneau photovoltaïque 3.

L'aile élastique 6 est également apte à adopter une position active dans laquelle, lorsque le dispositif de solidarisation 1 est utilisé pour relier un échangeur thermique 2 à un panneau photovoltaïque 3, et est inséré sous le rebord 40 du cadre 4, au-dessus de l'ensemble formé par l'échangeur thermique 2 et le panneau photovoltaïque 3, son extrémité libre 60 est rapprochée de la face inférieure 52 du profilé plat 5.

La distance d1, comprise entre l'extrémité libre 60 de l'aile élastique et sa face inférieure 52, est alors inférieure à la distance d0, et l'aile élastique 6 tend à revenir vers sa position de repos, du fait de son élasticité.

Grâce à une telle structure, dans sa position d'utilisation, le tronçon de profilé plat 5 est en appui contre le rebord 40, au niveau de ses extrémités 50, 51, et son aile élastique 6 exerce, sur l'échangeur thermique 2 placé contre la face arrière 30 du panneau photovoltaïque 3, une force orientée en direction du panneau photovoltaïque 3.

Des moyens de fixation du profilé plat 5 au panneau photovoltaïque 3, tels que notamment des vis 7 ou des rivets, permettant de relier les extrémités 50, 51 du profilé plat 5 aux points correspondants des côtés longitudinaux opposés 41, 42 du rebord 40, ou tout autre moyen de fixation équivalent, peuvent en outre être prévus pour maintenir le dispositif de solidarisation 1 fermement en place sur le système solaire hybride 10 dans sa position d'utilisation.

Tel qu'il ressort clairement de ce qui vient d'être décrit, le dispositif de solidarisation 1 selon l'invention permet de plaquer uniformément l'échangeur thermique 2 contre la face arrière 30 du panneau photovoltaïque 3. L'élasticité du dispositif de solidarisation 1 lui permet d'agir avec la même efficacité en toute situation, y compris en cas d'application d'une force ou d'un poids sur la face avant du panneau photovoltaïque 3, et/ou malgré le processus de création/destruction d'une couche de gel ou de glace éventuelle sur la face arrière du panneau photovoltaïque 3. Ainsi, l'échange de chaleur entre le panneau photovoltaïque 3 et l'échangeur thermique 2 est maximal en toute situation.

De plus, lors de l'assemblage de l'échangeur thermique 2 au panneau photovoltaïque 3, l'élasticité du tronçon de profilé 5 permet avantageusement de déplacer celui-ci par rapport à l'échangeur thermique 2 et de le positionner à l'endroit désiré, éventuellement complètement encastré sous le rebord 40 du panneau photovoltaïque 3, sans abîmer de manière néfaste l'échangeur thermique 2.

Bien entendu, le nombre de tronçons de profilé 5 qu'il convient d'utiliser pour un système solaire hybride 10 donné est choisi en fonction des dimensions de l'échangeur thermique 2 et du panneau photovoltaïque 3 et de manière telle que l'échangeur thermique 2 est plaqué avec une surface de contact maximum sur le panneau photovoltaïque 3.

D'autre part, les essais effectués ont pu montrer que la pression de Hertz exercée entre le dispositif de solidarisation 1 et l'échangeur thermique 2 et les conditions tribologiques des matériaux employés permettent d'éviter toute usure et toute détérioration de l'ensemble des éléments du système solaire hybride 10 selon l'invention.

Il est également à noter que le contact entre le(s) dispositif(s) de solidarisation 1 et l'échangeur thermique 2 s'effectue sur une surface relativement faible, ce qui permet avantageusement de ne pas bloquer l'échange thermique entre l'air ambiant et le panneau thermique 2.

Le dispositif de solidarisation 1 permet également à l'échangeur thermique 2 de se dilater librement par rapport au panneau photovoltaïque sans risques de dégradation intempestive, étant donné qu'il n'exerce pas de force directe dans le sens de la compression horizontale, ni dans le sens de la compression verticale, excepté par les frottements qui permettent à l'échangeur thermique 2 d'être maintenu en place.

Il convient de noter que le dispositif de solidarisation 1 pourrait également être utilisé pour fixer, contre une face d'un échangeur thermique, une face d'un panneau de nature quelconque, tel que par exemple un panneau en verre.

## Revendications

1. Dispositif de solidarisation (1) d'un échangeur thermique (2), à une face (30) d'un second panneau, tel que notamment un panneau photovoltaïque (3), comportant d'une part un organe pourvu de moyens de rappel élastique mobiles entre une position passive et une position active correspondant à la position d'utilisation du dispositif de solidarisation (1), et, d'autre part, des moyens d'assemblage dudit organe à l'échangeur thermique ou audit second panneau, lesdits moyens d'assemblage étant aptes à placer les moyens de rappel élastique dans leur position active dans laquelle, dans sa position d'utilisation, ledit dispositif de solidarisation (1) exerce sur l'échangeur thermique (2) placé contre la face (30) du second panneau (3) une force orientée en direction dudit second panneau (3), **caractérisé en ce que** ledit organe est défini par un tronçon de profilé plat (5) présentant une face supérieure et une face inférieure (52), tandis que lesdits moyens d'assemblage comportent un cadre (4) présentant une section en « L » ,agencé pour border ladite face (30) dudit second panneau (3) et pour former un rebord (40) apte à s'étendre vers l'intérieur de ladite face (30) à une hauteur h supérieure à l'épaisseur e du premier panneau (2), et **en ce que** le tronçon de profilé plat (5) présente une longueur L choisie de manière telle que, dans la position d'utilisation dudit dispositif de solidarisation (1), ledit profilé plat (5) s'étende sur l'ensemble formé par le premier panneau (2) et le second panneau (3) et ses extrémités (50, 51) sont insérées sous le rebord (40) dudit cadre (4) solidarisé à ladite face (30), et sont en appui contre ledit rebord (40).

2. Dispositif de solidarisation (1) selon la revendication 1, **caractérisé en ce qu'**au moins un des bords longitudinaux (53) dudit profilé plat (5) est prolongé par une aile élastique (6) s'étendant en direction de sa face inférieure (52) et apte à adopter une position passive dans laquelle une extrémité libre (60) de l'aile élastique (6) est éloignée de ladite face inférieure (52) et une position active dans laquelle l'extrémité libre (60) est rapprochée de ladite face inférieure (52), la distance d0 comprise entre l'extrémité libre (60) et ladite face inférieure (52), dans la position passive de ladite aile élastique (6), correspondant à au moins la hauteur h à laquelle s'étend le rebord (40) du cadre (4) lorsqu'il borde la face (30) du second panneau (3).

3. Dispositif de solidarisation (1) selon la revendication 2, **caractérisé en ce que** ladite aile élastique (6) s'étend sur toute la longueur dudit bord (53) du profilé plat (5).

4. Dispositif de solidarisation (1) selon l'une quelconque des revendications 2 ou 3, **caractérisé en ce que** l'autre bord longitudinal (54) dudit profilé plat (5) est prolongé par une bande de renfort mécanique (55) s'étendant perpendiculairement au profilé plat (5) en direction de sa face inférieure (52).

5. Dispositif de solidarisation (1) selon l'une quelconque des revendications précédentes, **caractérisé en ce qu'**il comporte des moyens de fixation du profilé plat (5) au rebord (40) du cadre (4) .

6. Dispositif de solidarisation (1) selon l'une quelconque des revendications précédentes, **caractérisé en ce qu'**il est réalisé en un matériau présentant des propriétés anticorrosion choisi parmi la liste comprenant un métal, un alliage, un matériau composite, recouvert ou non d'une couche de peinture.

7. Système hybride de collecte d'énergie solaire (10) comprenant un échangeur thermique (2) relié à une face (30) d'un panneau photovoltaïque (3) au moyen d'au moins un dispositif de solidarisation (1) selon l'une quelconque des revendications précédentes.

8. Système hybride de collecte d'énergie solaire (10) selon la revendication 7, **caractérisé en ce que** l'échangeur thermique (2) est réalisé en un matériau conducteur d'énergie thermique choisi parmi la liste comprenant l'aluminium, le cuivre, un alliage, un matériau composite.

9. Procédé de solidarisation d'un échangeur thermique (2) à une face (30) d'un panneau photovoltaïque (3), **caractérisé en ce que** l'on utilise au moins un dispositif de solidarisation (1) selon l'une quelconque des revendications 1 à 6.

## Patentansprüche

1. Vorrichtung zur Befestigung (1) eines Wärmetauschers (2) an einer Seite (30) eines zweiten Paneels wie insbesondere ein photovoltaisches Paneel (3), umfassend einerseits ein Organ, das mit mobilen elastischen Rückstellmitteln zwischen einer passiven Position und einer aktiven Position ausgestattet ist, die der Verwendungsposition der Vorrichtung zur Befestigung (1) entspricht, und andererseits Mittel zur Montage des Organs an den Wärmetauscher oder an das zweite Paneel, wobei die Mittel zur Montage ausgelegt sind, um die elastischen Rückstellmittel in ihre aktive Position zu platzieren, in der, in ihrer Verwendungsposition, die Vorrichtung zur Befestigung (1) auf den Wärmetauscher (2), der gegen die Seite (30) des zweiten Paneels (3) platziert ist, eine Kraft ausübt, die in Richtung des zweiten Paneels (3) ausgerichtet ist, **dadurch gekennzeichnet, dass** das Organ durch einen Abschnitt mit flachem Profil (5) gekennzeichnet ist, das eine obere Seite und eine untere Seite (52) aufweist, während die Mittel zur Montage einen Rahmen (4) umfassen, der einen L-förmigen Schnitt aufweist, der angeordnet ist, um die Seite (30) des zweiten Paneels (3) zu umgeben und um einen Rand (40) zu bilden, der ausgelegt ist, um sich hin zum Inneren der Seite (30) auf eine Höhe h zu erstrecken, die größer als die Dicke e des ersten Paneels (2) ist, und dadurch, dass der Abschnitt mit flachem Profil (5) eine Länge L aufweist, die derart ausgewählt ist, dass, in der Verwendungsposition der Vorrichtung zur Befestigung (1) sich das flache Profil (5) auf der Einheit erstreckt, die vom ersten Paneel (2) und zweiten Paneel (3) gebildet ist, und seine Enden (50, 51) unter dem Rand (40) des Rahmens (4) eingeführt sind, der an der Seite (30) befestigt ist, und gegen den Rand (40) aufliegen.

2. Vorrichtung zur Befestigung (1) nach Anspruch 1, **dadurch gekennzeichnet, dass** mindestens eine der Längskanten (53) des flachen Profils (5) durch einen elastischen Flügel (6) verlängert ist, der sich in Richtung seiner unteren Seite (52) erstreckt und ausgelegt ist, um eine passive Position einzunehmen, in der ein freies Ende (60) des elastischen Flügels (6) von der unteren Seite (52) entfernt ist, und eine aktive Position, in der das freie Ende (60) an die untere Seite (52) angenähert ist, wobei der Abstand d0, der zwischen dem freien Ende (60) und der unteren Seite (52) liegt, in der passiven Position des elastischen Flügels (6) mindestens der Höhe h entspricht, an die sich der Rand (40) des Rahmens (4) erstreckt, wenn er die Seite (30) des zweiten Paneels (3) umgibt.

3. Vorrichtung zur Befestigung (1) nach Anspruch 2, **dadurch gekennzeichnet, dass** sich der elastische Flügel (6) auf der gesamten Länge der Kante (53) des flachen Profils (5) erstreckt.

4. Vorrichtung zur Befestigung (1) nach einem der Ansprüche 2 oder 3, **dadurch gekennzeichnet, dass** die andere Längskante (54) des flachen Profils (5) durch ein Band zur mechanischen Verstärkung (55) verlängert ist, das sich senkrecht zum flachen Profil (5) in Richtung seiner unteren Seite (52) erstreckt.

5. Vorrichtung zur Befestigung (1) nach einem der vorhergehenden Ansprüche, **dadurch gekennzeichnet, dass** es Mittel zu Fixierung des flachen Profils (5) an den Rand (40) des Rahmens (4) umfasst.

6. Vorrichtung zur Befestigung (1) nach einem der vorhergehenden Ansprüche, **dadurch gekennzeichnet, dass** es aus einem Material hergestellt ist, das Korrosionsschutzeigenschaften aufweist, ausgewählt aus der Liste, umfassend ein Metall, eine Legierung, ein Verbundmaterial, beschichtet oder nicht mit einer Farbschicht.

7. Hybride Anlage zur Aufnahme von Solarenergie (10) umfassend einen Wärmetauscher (2), der mit einer Seite (30) eines photovoltaischen Paneels (3) mit Hilfe mindestens einer Vorrichtung zur Befestigung (1) nach einem der vorhergehenden Ansprüche verbunden ist.

8. Hybride Anlage zur Aufnahme von Solarenergie (10) nach Anspruch 7, **dadurch gekennzeichnet, dass** der Wärmetauscher (2) aus einem thermische Energie leitenden Material hergestellt ist, ausgewählt aus der Liste, umfassend Aluminium, Kupfer, eine Legierung, ein Verbundmaterial.

9. Verfahren zur Befestigung eines Wärmetauschers (2) mit einer Seite (30) eines photovoltaischen Paneels (3), **dadurch gekennzeichnet, dass** mindestens eine Vorrichtung zur Befestigung (1) nach einem der Ansprüche 1 bis 6 verwendet wird.

## Claims

1. A device for securing (1) a heat exchanger (2), to a face (30) of a second panel, in particular such as a photovoltaic panel (3), including on the one hand a member provided with resilient return means movable between a passive position and an active position corresponding to the usage position of the securing device (1), and, on the other hand, means for assembling said member to the heat exchanger or to said second panel, said assembly means being able to place the resilient return means in their active position in which, in its usage position, said securing device (1) exerts, on the heat exchanger (2) placed against the face (30) of the second panel (3), a force oriented toward said second panel (3), **characterized in that** said member is defined by a flat profiled segment (5) having an upper face and a lower face (52), while said assembly means include a frame (4) having an L-shaped section, arranged to border said face (30) of said second panel (3) and to form a rim (40) capable of extending toward the inside of said face (30) at a height h greater than the thickness e of the first panel (2), and **in that** the flat profiled segment (5) has a length L chosen such that, in the usage position of said securing device (1), said flat profile (5) extends over the assembly formed by the first panel (2) and the second panel (3) and its ends (50, 51) are inserted below the rim (40) of said frame (4) secured to said face (30), and bear against said rim (40).

2. The securing device (1) according to claim 1, **characterized in that** at least one of the longitudinal edges (53) of said flat profile (5) is extended by a resilient wing (6) extending toward its lower face (52) and able to adopt a passive position in which a free end (60) of the resilient wing (6) is separated from said lower face (52) and an active position in which the free end (60) is brought closer to said lower face (52), the distance d0 comprised between the free end (60) and said lower face (52), in the passive position of said resilient wing (6), corresponding to at least the height h at which the rim (40) of the frame (4) extends when it borders the face (30) of the second panel (3).

3. The securing device (1) according to claim 2, **characterized in that** said resilient wing (6) extends over the entire length of said edge (53) of the flat profile (5).

4. The securing device (1) according to any one of claims 2 or 3, **characterized in that** the other longitudinal edge (54) of said flat profile (5) is extended by a mechanical reinforcing strip (55) extending perpendicular to the flat profile (5) toward its lower face (52).

5. The securing device (1) according to any one of the preceding claims, **characterized in that** it includes means for fastening the flat profile (5) to the rim (40) of the frame (4).

6. The securing device (1) according to any one of the preceding claims, **characterized in that** it is made from a material having anti-corrosion properties chosen from the list comprising a metal, an alloy, a composite material, which may or may not be covered by a layer of paint.

7. A hybrid system for collecting solar energy (10) comprising a heat exchanger (2) connected to a face (30) of a photovoltaic panel (3) using at least one securing device (1) according to any one of the preceding claims.

8. The hybrid system for collecting solar energy (10) according to claim 7, **characterized in that** the heat exchanger (2) is made from a material conducting thermal energy chosen from the list comprising aluminum, copper, an alloy, a composite material.

9. A method for securing a heat exchanger (2) to a face (30) of a photovoltaic panel (3), **characterized in that** at least one securing device (1) is used according to any one of claims 1 to 6.
